(19)

Europäisches Patentamt

European Patent Office

Office européen des brevets

(11) EP 2 355 042 B1

(12) **EUROPEAN PATENT SPECIFICATION**

(45) Date of publication and mention of the grant of the patent:
**17.04.2013 Bulletin 2013/16**

(21) Application number: **10189608.2**

(22) Date of filing: **02.11.2010**

(51) Int Cl.:
***G06T 7/20*** (2006.01)

(54) **A method for foreground - background discrimination**

Verfahren zur Hintergrund-Vordergrundunterscheidung

Procédé de discrimination au premier plan - arrière-plan

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2009 TR 200909007**

(43) Date of publication of application:
**10.08.2011 Bulletin 2011/32**

(73) Proprietor: **Vestel Elektronik Sanayi ve Ticaret A.S. 45030 Manisa (TR)**

(72) Inventor: **Ozkalayci, Burak 45030 Manisa (TR)**

(74) Representative: **Cayli, Hülya Paragon Consultancy Inc. Koza Sokak No: 63/2 GOP 06540 Ankara (TR)**

(56) References cited:
**WO-A1-2006/054257 WO-A1-2008/091205 US-A- 6 008 865**

- SHIH-SHINH HUANG ET AL: "Region-Level Motion-Based Foreground Segmentation Under a Bayesian Network", IEEE TRANSACTIONS ON CIRCUITS AND SYSTEMS FOR VIDEO TECHNOLOGY, IEEE SERVICE CENTER, PISCATAWAY, NJ, US, vol. 19, no. 4, 1 April 2009 (2009-04-01), pages 522-532, XP011251367, ISSN: 1051-8215
- CHOI B-T ET AL: "NEW FRAME RATE UP-CONVERSION USING BI-DIRECTIONAL MOTION ESTIMATION", IEEE TRANSACTIONS ON CONSUMER ELECTRONICS, IEEE SERVICE CENTER, NEW YORK, NY, US, vol. 46, no. 3, 1 August 2000 (2000-08-01) , pages 603-609, XP001142884, ISSN: 0098-3063, DOI: DOI: 10.1109/30.883418

## Description

## Technical Field

This invention relates to a foreground (FG) - background (BG) discrimination method for video processing applications by determining whether the motion vectors belong to foreground or background according to an evaluated metric.

## Prior Art

Lack of foreground - background (FG - BG) discrimination causes so many problems in video application processes like object segmentation, motion segmentation, and frame rate up-conversion (FRUC) applications. Especially halo effect problem in the motion compensated interpolation step in FRUC applications occurs along the object - motion boundaries, since, FG - BG motion vectors are not discriminated in the halo regions. Also, this halo effect is caused by the covered and uncovered regions between two successive frames used for interpolation. Covering and uncovering are caused by the speed difference between the FG and BG objects. Thus, in order to reduce or avoid halo effect around the object - motion boundaries, the BG motion vector should be utilized in the unidirectional interpolation of occlusion regions (cover/uncover regions). For this purpose, FG - BG vector discrimination method should be described.

In document WO2008/091205A1, an image processing method involves determining a global motion between a reference frame and a current frame in a frame sequence is described. Said image processing method involves determining a classification parameter for a current group of at least one image element in a said current frame of said frame sequence. A representation of said global motion of image element property values from said reference frame in the sequence to said current frame is determined. A reference group is identified in said reference frame for said current group utilizing the determined global motion representation. Then, said classification parameter is calculated based on a difference in property values of said image elements in said current group and said reference group. This calculated classification parameter is used for FG - BG determination. As mentioned in document WO2008/091205A1, said parameter exceeds a threshold the group regarded as a foreground group in the frame otherwise it belongs to the background.

In document US 2002/0085096 A1; a method for detecting foreground or background vector near a discontinuity in a vector field is described. To detect said foreground or background vector in said vector field, covering and uncovering situation existence is checked. Then, motion velocities of the foreground and background objects are determined. According to these determined velocities, FG - BG vectors are identified.

In present invention, foreground - background discrimination is made by proposing FG - BG discrimination metric based on continuity or discontinuity of vectors in their own trajectory with spatial neighbourhood.

## Brief description of the invention

Present invention explains a method for FG - BG discrimination. To discriminate FG and BG, a reliable and robust discrimination metric is used. Said discrimination metric is calculated by accumulating vector differences in a motion vector field. In said motion vector field continuation and discontinuation of FG and BG vectors are detected. According to said continuation check, vector differences are accumulated and accumulation buffer is calculated. The appreciation analysis of discrimination metric represents that the accumulated difference is higher; probability of being BG motion vector is higher.

## Objective of the invention

The object of the present invention is to provide a new approach for FG - BG discrimination by proposing novel FG - BG discrimination metric.

Another object of the present invention is to propose reliable, robust FG - BG discrimination metric around occlusion regions based on motion continuation in temporal space.

Another object of the invention is to provide discrimination metric by accumulating the vector differences according to motion continuation in a motion vector field.

Another object of the invention is to check the continuation of motion vectors in a NxN block - sized grid by a window or kernel.

Another object of the invention is to reduce or avoid halo artifacts around the object/motion boundaries.

## Brief Description of the Drawings

| | |
|---|---|
| Figure 1-a: | shows estimated motion vector fields in forward and backward directions for moving foreground |
| Figure 1-b: | shows estimated motion vector fields in forward and backward directions for stationary foreground |
| Figure 2-a: | shows continuation of foreground and discontinuation of background vectors of two consecutive motion vector fields in forward direction and in temporal space for moving foreground |
| Figure 2-b: | shows continuation of foreground and discontinuation background vectors of two consecutive motion vector fields in forward direction and in temporal space for stationary foreground |
| Figure 3-a: | shows one dimensional cross sectional demonstration for a 3x3 window or kernel |

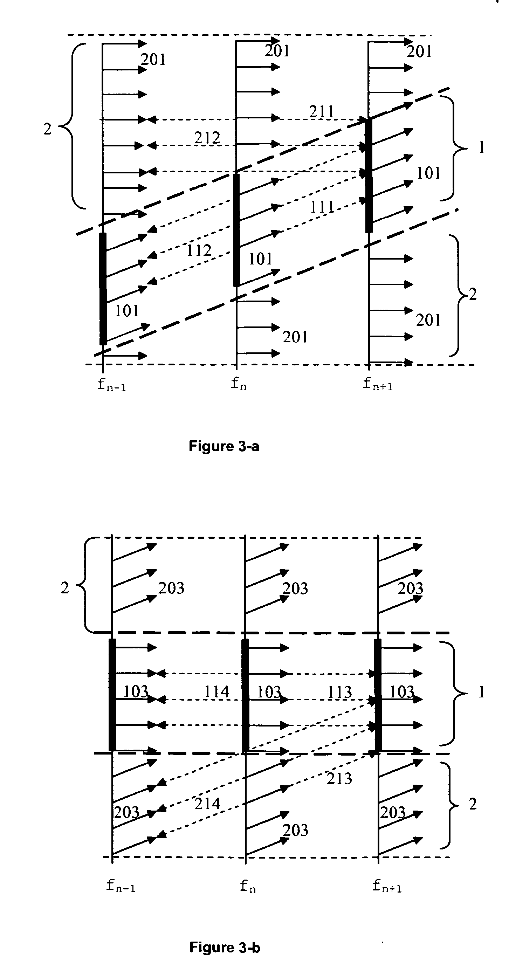

Figure 3-b:     size for moving foreground

shows one dimensional cross sectional demonstration for a 3x3 window or kernel size for stationary foreground

The reference numbers as used in figures may possess the following meanings.

Foreground (1)

Forward foreground vector for moving foreground (101)

Backward foreground vector for moving foreground (102)

Forward foreground vector for stationary foreground (103)

Backward foreground vector for stationary background (104)

Continuation of forward foreground vector for moving foreground (111)

Continuation of backward foreground vector for moving foreground (112) Background (2)

Forward background vector for moving foreground (201)

Backward background vector for moving foreground (202)

Forward background vector for stationary foreground (203)

Backward background vector for stationary foreground (204)

Discontinuation of forward background vector for moving foreground (211)

Discontinuation of backward background vector for moving foreground (212)

## Detailed Description of the Invention

The present invention offers a method for foreground (FG) (1) - background (BG) (2) discrimination for video applications. FG (1) - BG (2) discrimination has importance in many video application processes such as object segmentation, motion segmentation and frame rate up - conversion (FRUC). During said processes, halo effects occur around object - motion boundaries, since FG (1) - BG (2) discrimination is not considered. Lack of FG - BG discrimination causes wrong motion vector utilization in occlusion region. To reduce or avoid halo effects unidirectional interpolation should be made in occlusion region. For convenient unidirectional interpolation, FG (1) - BG (2) discrimination should be done.

The present invention comprises discrimination metric for FG (1) - BG (2) discrimination. In order to take action for calculating discrimination metric it is assumed that motion vector assignments in occlusion regions are accurate enough to represent true motion. In other words motion vector field estimated for a frame is occlusion - insensitive. Said discrimination metric is calculated by accumulating the vector differences of each vector in a window or a kernel along both forward and backward trajectory of the motion vector of the center block of the window. Moreover, said discrimination metric is based on the continuation and discontinuation of the vector fields for FG (1) and BG (2) respectively in temporal space.

Figure (1-a) shows BG (2) vectors (201, 202) and FG (1) vectors (101, 102) for moving FG (1) case and in forward (101, 201) and backward (102, 202) directions in a present frame $f_n$ according to previous $(f_{n-1})$ and next $(f_{n+1})$ frames.

Figure (1-b) shows BG (2) vectors (203, 204) and FG (1) vectors (103, 104) for stationary FG (1) case and in forward (103, 203) and backward (104, 204) directions in a present frame $f_n$ according to previous $(f_{n-1})$ and next $(f_{n+1})$ frames.

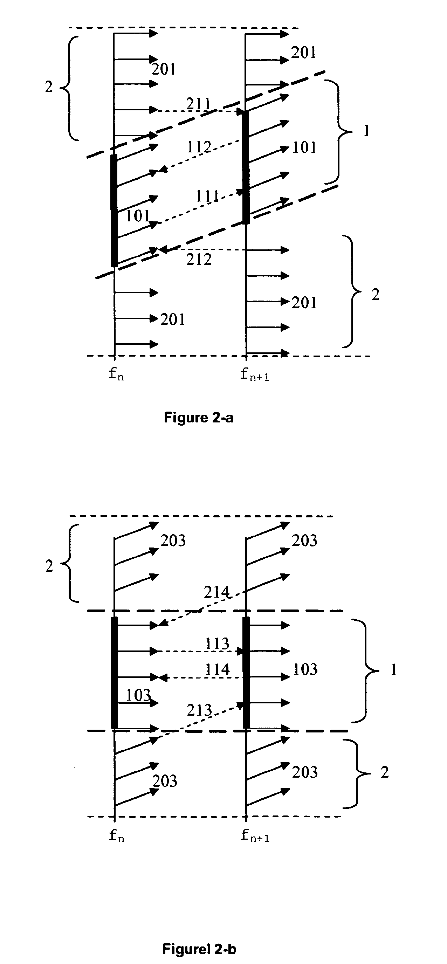

In Figure 2-a for moving FG (1) case, continuation (111, 112) of FG (1) vectors (101) and discontinuation (211, 212) of BG (2) vectors (201) in both forward (111, 211) and backward (112, 212) directories in a present frame $f_n$ according to next frame $f_{n+1}$ in occlusion regions is shown.

In Figure 2-b for stationary FG (1) case, continuation (113, 114) of FG (1) vectors (103) and discontinuation (213, 214) of BG (2) vectors (203) in both forward (113, 213) and backward (114, 214) directories in a present frame $f_n$ according to next frame $f_{n+1}$ in occlusion regions is shown.

According to figures 2-a and 2-b, continuation (111, 112, 113, 114) and discontinuation (211, 212, 213, 214) of vectors (101, 103, 201, 203) give evidence for the vectors to be FG (1) or BG (2) vectors (101, 103, 201, 203). Assuming that the inertia of the FG (1) objects does not change, the FG (1) motion vector trajectories follow similar motion vectors which are shown in the figures as 111, 112, 113 and 114. However, the BG (2) motion vector trajectories do not follow similar motion vectors which are shown in the figures as 211, 212, 213 and 214. Thus, continuation of motion vectors between present frame $f_n$ and next frame $f_{n+1}$ in occlusion regions, in their own trajectory represent that motion vectors are FG (1) motion vectors (101, 103). Moreover, if motion vectors do not continue their own trajectory in occlusion regions and discontinuity is observed between present frame $f_n$ and next frame $f_{n+1}$, then these vectors should be BG (2) motion vectors (201, 203).

In case of ground truth motion vector field the motion vector difference in forward and backward trajectories can be used as FG (1) - BG (2) discrimination metric. However, there is high possibility for error during motion vector field estimation processes. Thus, such a metric will not be convenient. To manage with convenient problem, explained continuation and discontinuation check of the trajectories should be done in a window or kernel containing the neighbour vectors.

By checking continuity and discontinuity of vectors in said window or kernel, discrimination metric will be calculated. The calculation of discrimination metric takes place in NxN block-sized grid which comprises estimated motion vector field. In NxN block - sized grid, said window or kernel scans all blocks in said grid. Said window or kernel can be 3x3 block - sized, for instance. As explained above, said discrimination metric is calculated by accumulating vector differences of each vector in said window or kernel along the forward and backward trajectory of the motion vector of the center block of said window or kernel.

In Figure 3-a, checking continuity (111, 112) and discontinuity (211, 212) of FG (1) and BG (2) vectors (101, 201) by a 3x3 window or kernel size in NxN block - sized grid is illustrated. Movement of a FG (1) object in 3 frames which are previous frame $f_{n-1}$, present frame $f_n$ and next frame $f_{n+1}$ is shown in figure 3-a. When the present frame $f_n$ takes into account, it is seen that vectors (101) belonging to FG (1) object have continuity (111, 112) in their own trajectory such as in forward (111) direction which can be checked by next frame $f_{n+1}$ and in backward (112) direction which can be checked by previous frame $f_{n-1}$. However, BG (2) vectors (201) do not have continuity (211, 212) in their own trajectory which can be checked by previous $f_{n-1}$ and next $f_{n+1}$ frames. According to these continuation (111, 112) and discontinuation (211, 212) of vectors as explained above the vector differences accumulation is done by using L2 (Euclidean) or L1 (Manhattan) distance metric. Accumulating the vector differences for forward and backward trajectories, for each vector (101, 201), for each window or kernel centred with each vector in the motion vector field, the resultant accumulation buffer will be the measure of each vector's background metric which represents the discrimination metric. The appreciation analysis of discrimination metric represents that the accumulated difference is higher; probability of being BG (2) motion vector (201) is higher, since, BG (2) vectors (201) do not follow their own trajectory in occlusion regions.

In Figure 3-b, there is also an example for 3x3 window or kernel size. However, the difference in Figure 3-b is, FG (1) object is stationary. As explained above, FG (1) vectors (103) continue (113, 114) in their own trajectory and BG (2) vectors (203) do not follow their own trajectory. Thus, according to these continuation (113, 114) and discontinuation (213, 214) of vectors accumulation buffer is calculated to discriminate FG (1) and BG (2).

The calculation of said accumulation buffer is described below step by step for acquiring a scalar map which represents the FG (1) - BG (2) discrimination metric measure for the motion vectors in the motion vector field. Before calculation, it is assumed that a block based motion vector field is already obtained by some motion estimation method.

**Step 1**: Set the vector difference buffer ($D_{buf}$) to zero for all motion vector blocks.

$$D_{buf} = 0$$

Every block is visited by using any scan order (raster scan) by the window or kernel and the steps 2 and 3 are applied.

**Step 2**: The forward and backward trajectory, crossing block locations, $x_f$, $x_b$, on the motion vector fields of next and previous frames are computed.

$x_f=(x+v_t(x))/N$ and

$x_b=(x-v_t(x))/N$ where $v_t(x)$ is the motion vector of the block spatially at x, temporally at t; and N is the block size in pixel unit.

**Step 3**: The each block, in the NxN block - sized grid is centered at the block in the window or kernel positioned at x is visited, and the forward and backward trajectory motion vector difference is accumulated to $D_{buf}$ buffer.

$D_{buf}(x+n)=D_{buf}(x+n)+\|v_t(x+n)-v_{t+1}(x_f+n)\|$ for forward trajectory difference and

$D_{buf}(x+n)=D_{buf}(x+n)+\|v_t(x+n)-v_{t-1}(x_b+n)\|$ for backward trajectory difference.

$n$ is an offset vector to reach the each blocks in said window or kernel. As an example, for a 3x3 window or kernel the set of vectors, $n$, must be {(-1, -1), (-1, 0), (-1,1), (0,-1), (0,0), (0,1), (1,-1), (1,0), (1,1)}.

**Claims**

**1.** A method for foreground (1) - background (2) vector discrimination in a NxN block - sized grid comprises estimated motion vector field in occlusion region for video display applications **characterized in that** it further comprises the steps of;

> - detecting continuation (111, 112, 113, 114) and discontinuation (211, 212, 213, 214) of forward (111, 113, 211, 213) and backward (112, 114, 212, 214) trajectories of foreground (1) vectors (101, 103) and background (2) vectors (201, 203) in said motion vector field,
> - calculating motion vector difference according to continuation (111, 112, 113, 114) and discontinuation (211, 212, 213, 214) of foreground (1) vectors (101, 103) and background (2) vectors (201, 203),
> - accumulating the said motion vector differences of each vector of the grid along both forward and backward trajectory of the motion vector of the center block of the grid.

**2.** A method according to claim 1 wherein, detection of continuation (111, 112, 113, 114) and discontinuation (211, 212, 213, 214) of the trajectories is done in a window or kernel containing the neighbour vectors.

3. A method according to claim 1 wherein, accumulation is done for each vector (101, 102, 103, 104, 201, 202, 203, 204) by scanning with said window or kernel centred with each vector in said motion vector field.

4. A method according to claim 1 wherein, said accumulation is done by using L2 distance metric.

5. A method according to claim 1 wherein, said accumulation is done by using L1 distance metric.

6. A method according to claim 1 wherein, accumulation buffer calculation further contains the steps of,

   - setting the vector difference buffer ($D_{buf}$) to zero for all motion vector blocks. $D_{buf} = 0$
   - computing the forward and backward trajectory, crossing block locations, $x_f$, $x_b$, on the motion vector fields of next and previous frames.
   $x_f=(x+v_t(x))/N$ and
   $x_b=(x-v_t(x))/N$ where $v_t(x)$ is the motion vector of the block spatially
   at x, temporally at t; and N is the block size in pixel unit.
   - visiting the each block, in the NxN block - sized grid, centered at the block in the window or kernel positioned at x, and accumulating the forward and backward trajectory motion vector difference to $D_{buf}$ buffer.
   $D_b(x_u+n)_f=D_{buf}(x+n)+\|v_t(x+n)-v_{t+1}(x_f+n)\|$ for forward
   trajectory difference and
   $D_{buf}(x+n)=D_{buf}(x+n)+\|v_t(x+n)-v_{t-1}(x_b+n)\|$ for backward
   trajectory difference.
   $n$ is an offset vector to reach the each blocks in the window/kernel.

**Patentansprüche**

1. Verfahren zur Vordergrund(1)-Hintergrund(2)-Vektorunterscheidung in einem Raster von NxN-Blockgröße, umfassend ein geschätztes Bewegungsvektorfeld in einem Verdeckungsbereich für Video-Display-Anwendungen, **dadurch gekennzeichnet, dass** es des Weiteren die folgenden Schritte umfasst:

   - Erfassen einer Fortführung (111, 112, 113, 114) und einer Unterbrechung (211, 212, 213, 214) von Vorwärts-Trajektorien (111, 113, 211, 213) und Rückwärts-Trajektorien (112, 114, 212, 214) von Vordergrund(1)-Vektoren (101, 103) und Hintergrund(2)-Vektoren (201, 203) in dem Bewegungsvektorfeld,
   - Berechnen einer Bewegungsvektordifferenz gemäß der Fortführung (111, 112, 113, 114) und der Unterbrechung (211, 212, 213, 214) der Vordergrund(1)-Vektoren (101, 103) und der Hintergrund(2)-Vektoren (201, 203),
   - Sammeln der Bewegungsvektordifferenzen für jeden Vektor des Rasters, sowohl entlang der Vorwärts-Trajektorie als auch der Rückwärts-Trajektorie des Bewegungsvektors des mittleren Blocks des Rasters.

2. Verfahren nach Anspruch 1, **dadurch gekennzeichnet, dass** die Erfassung der Fortführung (111, 112, 113, 114) und der Unterbrechung (211, 212, 213, 214) der Trajektorien in einem Window oder Kernel, enthaltend die Nachbarvektoren, durchgeführt wird.

3. Verfahren nach Anspruch 1, **dadurch gekennzeichnet, dass** das Sammeln für jeden Vektor (101, 102, 103, 104, 201, 202, 203, 204) durchgeführt wird, indem das Window oder Kernel zentriert mit jedem Vektor in dem Bewegungsvektorfeld gescannt wird.

4. Verfahren nach Anspruch 1, **dadurch gekennzeichnet, dass** das Sammeln unter Verwendung einer L2-Distanzmetrik durchgeführt wird.

5. Verfahren nach Anspruch 1, **dadurch gekennzeichnet, dass** das Sammeln unter Verwendung einer L1-Distanzmetrik durchgeführt wird.

6. Verfahren nach Anspruch 1, **dadurch gekennzeichnet, dass** ein Sammeln der Pufferkalkulation des Weiteren die folgenden Schritte enthält:

   - Setzen des Vektordifferenzpuffers ($D_{buf}$) für sämtliche Bewegungsvektorblöcke auf null, $D_{buf} = 0$,
   - Berechnen der Vorwärts- und der Rückwärts-Trajektorie, wobei Blockorte $x_f$, $x_b$ auf den Bewegungsvektorfeldern der nächsten und vorhergehenden Rahmen gekreuzt werden,
   $X_f=(X+v_t(X))/N$ und
   $X_b=(X-v_t(X))/N$ wobei $v_t(X)$ der Bewegungsvektor des Blocks räumlich bei x, zeitlich bei t ist und N die Blockgröße in Pixeleinheit ist,
   - Abarbeiten jedes Blocks in dem Raster der Blockgröße NxN, zentriert an dem Block in dem Window oder Kernel, positioniert bei x und Sammeln der Vorwärts- und Rückwärts-Trajektorie-Bewegungsvektordifferenz auf den $D_{buf}$-Buffer,
   $D_b(\chi_u+n)_f=D_{buf}(\chi+n)+\|v_t(\chi+n)-v_{t+1}(\chi_f+n)\|$ für die Vorwärts - Trajektorie - Differenz und
   $D_{buf}(\chi+n)=D_{buf}(\chi+n)+\|v_t(\chi+n)-v_{t-1}(\chi_b+n)\|$ für die Rückwärts - Trajektorie - Differenz,
   wobei n ein Offsetvektor ist, um die jeweiligen Blöcke in dem Window/Kernel zu erreichen.

$D_{buf} = 0$
- calculer la trajectoire vers l'avant et vers l'arrière, croiser les emplacements de bloc $x_f$, $x_b$, sur les champs vectoriels de mouvement des cadres suivants et précédents,
$x_f=(x+v_1(x))/N$ et
$x_b=(x-v_1(x))/N$ où $v_1(x)$ est le vecteur de mouvement du bloc spatialement à x, temporellement à t ; et N est la taille de bloc en unité de pixel,
- visiter chaque bloc, dans la grille dimensionnée par bloc NxN, centré au niveau du bloc dans la fenêtre ou le noyau positionné(e) à x, et accumuler la différence vectorielle de mouvement de trajectoire vers l'avant et vers l'arrière dans la mémoire tampon $D_{buf}$,
$D_b(x_u+n)_f=D_{buf}(x+n)+\| v_1(x+n)-v_{i+1}(x_f+n)\|$ pour la différence de trajectoire vers l'avant et
$D_{buf}(x+n)=D_{buf}(x+n)+\|v_1(x+n)-v_{i-1}(xb+n)\|$ pour la différence de trajectoire vers l'arrière,
n est un vecteur décalé pour atteindre chaque bloc dans la fenêtre/noyau.

## Revendications

1. Procédé pour la discrimination de vecteur de premier plan (1) - d'arrière plan (2) dans une grille dimensionnée par bloc NxN - comprenant un champ vectoriel de mouvement estimé dans une région d'occlusion pour des applications d'affichage vidéo **caractérisé en ce qu'**il comprend en outre les étapes consistant à :

   - détecter la continuité (111, 112, 113, 114) et la discontinuité (211, 212, 213, 214) des trajectoires vers l'avant (111, 113, 211, 213) et vers l'arrière (112, 114, 212, 214) des vecteurs (101, 103) de premier plan (1) et des vecteurs (201, 203) d'arrière plan (2) dudit champ vectoriel de mouvement,
   - calculer la différence de vecteurs de mouvement selon la continuité (111, 112, 113, 114) et la discontinuité (211, 212, 213, 214) des vecteurs (101, 103) de premier plan (1) et des vecteurs (201, 203) d'arrière plan (2),
   - accumuler lesdites différences de vecteurs de mouvement pour chaque vecteur de la grille le long des deux trajectoires vers l'avant et vers l'arrière du vecteur de mouvement du bloc central de la grille.

2. Procédé selon la revendication 1, dans lequel la détection de la continuité (111, 112, 113, 114) et de la discontinuité (211, 212, 213, 214) de la trajectoire est réalisée dans une fenêtre ou noyau contenant les vecteurs voisins.

3. Procédé selon la revendication 1, dans lequel l'accumulation est réalisée pour chaque vecteur (101, 102, 103, 104, 201, 202, 203, 204) en balayant ladite fenêtre ou noyau centré(e) avec chaque vecteur dans ledit champ vectoriel de mouvement.

4. Procédé selon la revendication 1, dans lequel ladite accumulation est réalisée en utilisant la distance métrique L2.

5. Procédé selon la revendication 1, dans lequel ladite accumulation est réalisée en utilisant la distance métrique L1.

6. Procédé selon la revendication 1, dans lequel le calcul d'accumulation de la mémoire tampon contient en outre les étapes consistant à :

   - mettre la mémoire tampon de la différence vectorielle ($D_{buf}$) à zéro pour tous les blocs vectoriels de mouvement,

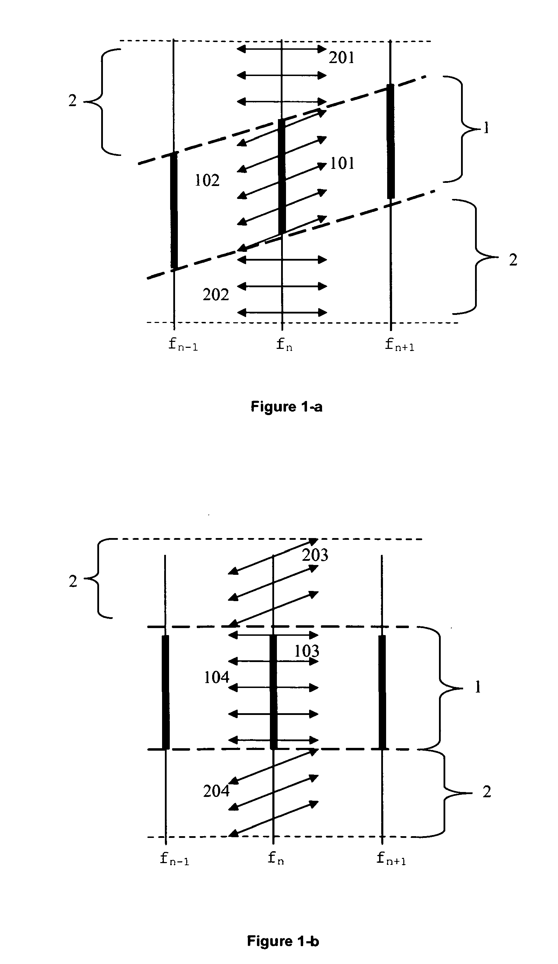

**Figure 1-a**

**Figure 1-b**

Figure 2-a

Figurel 2-b

Figure 3-a

Figure 3-b

**EP 2 355 042 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008091205 A1
- US 20020085096 A1